Europäisches Patentamt

European Patent Office

Office européen des brevets

(19)

(11) Publication number: **0 074 548**
**A1**

(12) **EUROPEAN PATENT APPLICATION**

(21) Application number: **82107930.8**

(22) Date of filing: **28.08.82**

(51) Int. Cl.³: **H 01 M 10/39**
**C 04 B 41/00**

(30) Priority: **03.09.81 US 298978**

(43) Date of publication of application:
**23.03.83 Bulletin 83/12**

(84) Designated Contracting States:
**DE FR GB IT SE**

(71) Applicant: GENERAL ELECTRIC COMPANY
1 River Road
Schenectady New York 12305(US)

(72) Inventor: Singh, Raj Narain
31 Shelburne Court
Schenectady New York 12309(US)

(72) Inventor: Gaddipati, Achuta Ramayya
10 Robinson Road
Scotia New York 12302(US)

(74) Representative: Catherine, Alain
GETSCO 42, avenue Montaigne
F-75008 Paris(FR)

(54) Process for producing a cationically-conductive sodium beta"-alumina electrolyte of symmetric polarization and ceramic electrolyte thus obtained.

(57) The process comprises washing the surface portion of a cationically-conductive sodium beta"-alumina electrolyte of asymmetric polarization with water or steam to remove the asymmetric polarization-causing material therefrom and drying said washed electrolyte.

The cationically-conductive sodium beta"-alumina electrolyte of symmetric polarization thus obtained is particularly useful in a sodium-sulfur cell or battery.

*FIG. 2*

EP 0 074 548 A1

Process for producing a cationically-conductive sodium
beta"-alumina electrolyte of symmetric polarization
and ceramic electrolyte thus obtained


The present invention relates to a cationically-
conductive alkali metal beta"-alumina ceramic electrolyte
particularly useful in a sodium-sulfur cell or battery.
In one particular aspect, it relates to the washing of the
ceramic electrolyte with water to remove or prevent asymmetric polarization. In another particular aspect, it relates
to the resulting washed ceramic electrolyte of symmetric
polarization.

A sodium-sulfur battery utilizes a ceramic
separator material based on either sodium beta- and/or sodium
beta"-alumina phases. The ceramic separator also performs
as an electrolyte which preferentially allows only sodium
ion migration during the operation of the battery. Specifically, the sodium-sulfur battery operates at 330°C, and both
sodium and sulfur are molten at the battery operating temperature. The separator between the sodium and the sulfur
electrodes is a solid ionic membrane, usually just called
beta-alumina (a chemical compound of $Na_2O$ and $Al_2O_3$, often
with dopants such as $Li_2O$ and/or MgO). This solid ceramic
membrane allows only $Na^{\pm}$ion transport.

As in any other battery, the basic building block
is a cell. Presently, the sodium-sulfur cell is cylindrical
in geometry, and employs a closed-end sodium beta-alumina
ceramic tube. In most designs, the inside of the tube is
filled with sodium. Since sulfur is a poor conductor of
electricity, a porous carbon matrix is used as the current
collector. The beta-alumina ceramic tube is sealed onto a
donut-shaped ceramic insulating disc to create a complete
physical-chemical separation between the sodium-sulfur
electrodes. The sodium and the sulfur containers serve as
current collectors. In a battery, many sodium-sulfur cells
are connected electrically in series/parallel.

A sodium-sulfur battery utilizing sodium beta"-alumina electrolyte offers advantages of superior energy efficiency than a battery system that utilizes sodium beta-alumina electrolyte.

A number of electrolytes of sodium beta"-alumina phase composition, or a mixture of sodium beta- and beta"-alumina phase composition wherein the beta"-alumina phase was present in a predominant amount, have been fabricated so far; however, most in as-sintered state have shown deleterious effects of asymmetric polarization and resistivity aging, i.e. increase in the electrolyte resistivity with usage in the Na/S battery system. It was experimentally found that these ceramic electrolytes processed in a normal manner, i.e. the as-sintered product or product produced upon completion of sintering, show on their surface the presence of soda- and lithia-rich phases as well as glassy metastable phase of $NaAlO_2$ or a mixture of $Na_2O$, $Li_2O$, $Si_2O$ and $CaO$. Impurity phases such as $(Si, Ca)$-rich phases have also been found. These phases appear to coat or form a film tightly adherent to the surface of the ceramic electrolyte. It was suspected that the presence of these phases makes these ceramic electrolytes more sensitive to atmospheric contaminants like moisture and $CO_2$ causing the ceramic to polarize in an asymmetric manner. Specifically, these compounds or phases are water-sensitive and may react with it to cause film formation and dendrite growth on the surface. The presence of such a film can cause the ceramic to polarize in an asymmetric manner. In contrast, ceramic electrolytes of sodium beta-alumina phase composition do not show asymmetric polarization.

The present invention is directed to eliminating asymmetric polarization by removing asymmetric polarization-causing phases, material or film from the electrolyte surfaces, i.e. grain boundaries as well as intragranular surfaces.

Those skilled in the art will gain a further and better understanding of the present invention from the detailed description set forth below, considered in conjunction with the figures accompanying and forming a part of the specification, in which :

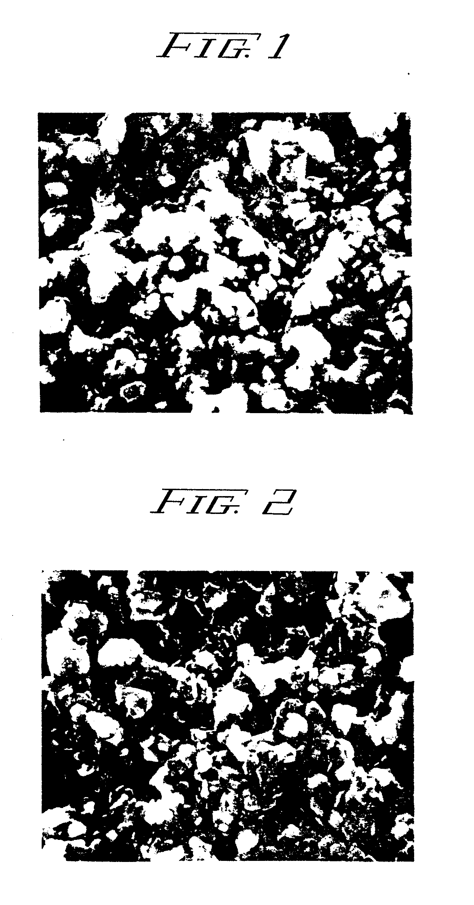

FIGURE 1 is a scanning electron micrograph (magnified 1000X) of an as-sintered sodium beta"-alumina polycrystalline ceramic electrolyte of asymmetric polarization;

FIGURE 2 is a scanning electron micrograph (magnified 1000X) of an as-sintered sodium beta"-alumina ceramic electrolyte which did not differ significantly in composition from the ceramic electrolyte of Figure 1 after it was washed with water and dried producing an electrolyte of symmetric polarization according to the present invention; and

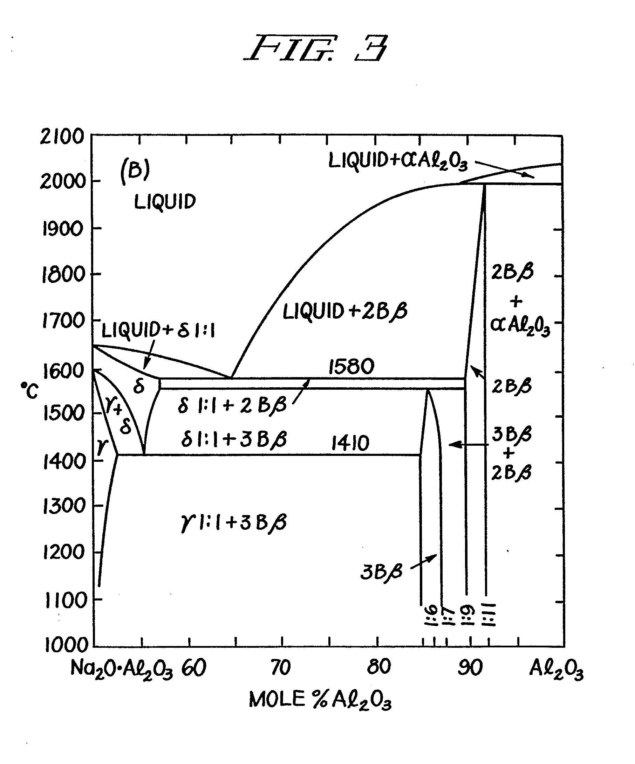

FIGURE 3 is a phase diagram of the system $Na_2O.Al_2O_3$ which is shown on page 367 of "Evaluation of the Literature Data on $\beta$-$Al_2O_3$ and Related Phases," R.C. DeVries and W.L. Roth, Journal of American Ceramic Society, Vol. 52, N° 7, pages 364-369, wherein 2B $\beta$ denotes sodium beta-alumina phase and 3B $\beta$ denotes sodium beta"-alumina phase.

Briefly stated, the present method comprises providing a cationically-conductive polycrystalline ceramic electrolyte of asymmetric polarization, said asymmetric polarization being caused by asymmetric polarization-causing material on the surface portion of said ceramic electrolyte, said ceramic electrolyte ranging in composition from an alkali metal beta"-alumina phase to a mixture of alkali metal beta"-alumina phase and up to 50 % by volume of alkali metal beta-alumina phase based on the total volume of the electrolyte, said alkali metal being selected from the group consisting of sodium, potassium, lithium, mixtures thereof and alloys thereof, and washing the surface or surface portion of said ceramic electrolyte with water or steam to remove said asymmetric polarization-causing material therefrom and drying said washed electrolyte to produce a cationically-conductive ceramic electrolyte of symmetric polarization, said water or steam washing and drying having no significant deleterious effect on said ceramic electrolyte.

In a sodium-sulfur cell or battery, there are two kinds of resistances measured, a discharge resistance and a charge resistance. When the discharge resistance is significantly higher than the charge resistance, that is called asymmetric polarization. As used herein, an electrolyte of asymmetric polarization is one which shows or will show asymmetric polarization when used as an electrolyte in a sodium-sulfur cell or battery, or an equivalent cell or battery. Also, as used herein, an electrolyte of symmetric polarization is one which shows or will show symmetric polarization, i.e. discharge resistance equal to or not significantly different from charge resistance, when used as an electrolyte in a sodium-sulfur cell or battery or an equivalent cell or battery.

The cationically conductive polycrystalline ceramic electrolyte of asymmetric polarization in the present process usually is composed of alkali metal beta"-alumina phase. However, it can be of asymmetric polarization and be comprised of a mixture of alkali metal beta"-alumina phase and up to 50 % by volume of alkali metal beta-alumina phase based on the total volume of the electrolyte. This ceramic electrolyte covers a wide range of non-stoichiometric as well as stoichiometric compounds of alkali metal oxide and alumina and can be represented by the formula $A_2O.xAl_2O_3$ where A is the alkali metal and x can vary from about 5 to about 11. The alkali metal is selected from the group consisting of sodium, potassium, lithium, mixtures thereof, and alloys thereof. The composition of the ceramic electrolyte can be determined by a number of techniques such as, for example, X-ray diffraction analysis and X-ray fluorescence analysis.

The present ceramic electrolyte contains a stabilizer, i.e. stabilizing agent, for the beta"-alumina phase. This stabilizer is selected from the group consisting of $Li_2O$, MgO, NiO, CoO and mixtures thereof. However, this stabilizer may be part of the formula or formulation for the present ceramic electrolyte, i.e. it can be $Li_2O$. This stabilizer is used in at least a stabilizing amount for the beta"-alumina phase which is determinable empirically depending largely on the particular electrolyte composition and the particular stabilizer used. If not part of the formula or formulation for the present ceramic electrolyte, this stabilizer usually ranges up to 5 % by weight of the total weight of the electrolyte.

The alkali metal beta-alumina phase herein denotes that crystal structure in which the unit cell contains two spinel-like blocks, each with four layers of oxygen atoms, counting along the c-direction, with aluminum atoms in certain interstitial positions. The unit cell has a crystallographic repeat distance along the c-axis of approximately 22Å (2.2 mm). Monovalent cations are mobile in the rather loosely packed planes separating the individual spinel blocks. On the other hand, the alkali metal beta"-alumina phase denotes herein that the unit cell contains three spinel-like blocks and the crystallographic repeat distance is 33Å (3.3 mm) along the c-axis. In the alkali metal beta-alumina phase each spinel-like block is rotated 180° with respect to an adjacent one while in the alkali metal beta"-alumina phase, the rotation is 120°. In other words, the loosely packed conducting plane is also a mirror plane in the alkali metal beta-alumina phase but not in the alkali metal beta"-alumina phase.

The ceramic electrolyte of asymmetric polarization can be prepared by a number of techniques. For example, a green body can be shaped in a conventional manner from the alkali metal beta-alumina powder or a mixture of reactants, for example a mixture of sodium oxide, lithium oxide, magnesium oxide, and alumina, which will produce the present alkali metal beta"-alumina or a mixture thereof with the alkali metal beta-alumina. The green body can be produced in a conventional manner such as isostatic pressing or slip casting. It can be in any desired shape and size, and it can be of a geometrically complex and/or hollow form. Preferably, it is in the form of a hollow tube closed at one end which, when fired, will be suitable for use in a sodium-sulfur battery. Such a hollow tube can be prepared by a conventional ceramic processing technique, or by electrophoretic deposition as disclosed in US 3,900,381 to R.W. Powers, incorporated herein by reference and assigned to the assignee hereof. The green body or hollow tube preferably has a density of at least 40 %, and preferably at least 50 %, of the theoretical density for beta-$Al_2O_3$, i.e. 3.26 g/cm$^3$, to promote shrinkage to high density. The green body is sintered in an atmosphere which has no significant deleterious effect on it at sintering temperatures which may range from 1525°C to 1825°C. For use as an electrolyte in a sodium-sulfur cell or a battery, the sintered ceramic body has a density greater than 98 %, and preferably greater than 99 %, of the theoretical density for beta-$Al_2O_3$, i.e. 3.26 g/cm$^3$ United States Patent N° 4 302 519, entitled "Production of Beta-Alumina Ceramic Tubes" filed on August 25, 1980 in the name of Robert W. Powers et al, incorporated herein by reference and assigned to the assignee hereof, discloses the production of sintered sodium beta-, beta"-alumina cylindrical tubes of uniform shape suitable for use as an electrolyte in a sodium-sulfur battery which are useful in the present process.

In the present process, the ceramic electrolyte is washed with water or steam to remove the asymmetric polarization-causing film or material therefrom and produce a cationically conductive electrolyte of symmetric polarization. The water should be at least sufficiently low in mineral content so that it can remove and dissolve away the asymmetric polarization-causing material from the surface or surface portion of the ceramic electrolyte. Preferably, the water is free of any significant amount of mineral content, and most preferably, the water is distilled or deionized water.

The particular water or steam washing time period depends largely on the temperature of the water or steam, the particular washing technique and the amount of asymmetric polarization-causing material on the ceramic. Generally, the present water or steam washing time ranges from a few minutes to about 30 minutes. Specifically, in carrying out the present process, contact time and temperature of the water or steam are interrelated factors with the rate of dissolution of asymmetric polarization-causing material increasing with increasing water or steam temperature. Generally, the temperature of the water ranges from about room temperature up to about its boiling point, but preferably, it ranges from 65°C to 75°C. Generally, the temperature of the steam ranges from 100°C. To prevent thermal shock, the ceramic electrolyte should be at a temperature substantially the same as that of the contacting water or steam, usually $\pm$ 25°C of the temperature of the water.

The ceramic electrolyte can be washed with the water or steam by a number of techniques, and it can be washed in a batch-wise or continuous manner, as desired. Preferably, the ceramic electrolyte is immersed in the water or steam. The present water-washing, when carried out by immersing the ceramic electrolyte in distilled water maintained at a temperature of 70°C, will be completed ordinarily within about 15 minutes to produce the present electrolyte of symmetric polarization.

The required water or steam washing or water or steam contact time is determinable empirically. For example, it can be determined by examining the surface of the ceramic electrolyte under a microscope to determine whether surface film or coating has been removed therefrom leaving no significant amount thereon. The difference in appearance between the as-sintered surface and the present washed as-sintered surface is illustrated by a comparison of the as-sintered surface of Figure 1 with the present washed as-sintered surface of Figure 2. The Figure 1 surface appears indistinct, hazy and blurred indicating the presence of a film or coating which prevents characterization of such a surface. In contrast, the present washed as-sintered surface, as illustrated by Figure 2, shows no presence of the surface film, i.e. it appears clean and shows a morphology which is distinct and characterizable. Also, the water or steam washed and dried electrolyte can be tested in a cell to determine if it exhibits asymmetric or symmetric polarization.

The present water or steam washing to remove or dissolve away asymmetric polarization-causing material should have no significant deleterious effect on the ceramic electrolyte. Specifically, the electrolyte should not be water or steam washed or in contact with the water or steam for a time period substantially longer than that required to remove or dissolve away the asymmetric polarization-causing material since such extensive washing may significantly deleteriously affect its mechanical and/or electrical properties. Such extensive washing, i.e. generally in excess of about 2 hours, may, for example, leach out a significant amount of the sodium oxide component of the electrolyte thereby degrading its properties. Significant changes in the washed and dried electrolyte can be detected by weight change and measurement of mechanical and electrical properties.

The present washed and dried as-sintered cationically conductive ceramic electrolyte has a surface which is characterizable and which is illustrated in Figure 2. Specifically, the present product has a surface which does not contain or show the presence of any significant amount of asymmetric polarization-causing film or material. Such asymmetric polarization-causing film or material is detectable, for example, under a microscope or by means of electron microscopy. Also, that the present surface has been attained can be shown by testing the electrolyte in a cell to determine if its exhibits symmetric polarization. The surface of the present product has a morphology of geometric shape. Specifically, its surface is comprised of grains which are multi-faceted platelets of varying size. The platelets are randomly stacked and their grain boundaries are well defined.

Upon completion of the present water or steam washing, the ceramic electrolyte is dried in a manner which has no significant deleterious effect on it. Preferably, upon completion of the water or steam washing, the ceramic is washed or rinsed with a water-absorbing solvent, preferably by immersing it in the solvent, to remove excess water therefrom to stop further reaction with the water. Preferably, such water-absorbing solvent is an organic alcohol such as methanol, ethanol or isopropanol. The ceramic electrolyte can be dried in air provided such drying does not allow water to react with the sodium oxide component therein to form sodium hydroxide which would react with the carbon dioxide in the air to form sodium carbonate in a significant amount, since such sodium carbonate on its surface would lower its conductivity. Preferably, the electrolyte is dried in a vacuum or in an atomosphere in which it is substantially inert such as argon, nitrogen, hydrogen and helium Most preferably, it is dried in a vacuum or in an atmosphere that is dry to prevent absorption of moisture thereon and such a dry

**0074548**

atmosphere would be one having a dew point ranging from 0°C to -30°C.

The electrolyte can be dried at a temperature ranging from room temperature to 100°C, and preferably from 90°C to 100°C to increase the rate of removal of water therefrom. Drying temperatures higher than 100°C provide no significant advantage. Upon completion of drying, the electrolyte should contain no significant amount of water.

The present cationically-conductive ceramic electrolyte has a surface characterizable as having a morphology of geometric shape, said surface being comprised of randomly stacked multi-faceted platelets, said ceramic electrolyte being of symmetric polarization or will show symmetric polarization in a sodium-sulfur cell or battery, or an equivalent or similar type of cell or battery, and it ranges in composition from an alkali metal beta"-alumina phase to a mixture thereof with up to 50 % by volume of alkali metal beta-alumina phase based on the total volume of the electrolyte, said alkali metal being selected from the group consisting of sodium, potassium, lithium, mixtures thereof and alloys thereof.

The present ceramic electrolyte is useful in devices such as sodium-sulfur batteries and electrochromic displays. It is particularly useful in the form of a hollow tube closed at one end, in a sodium-sulfur cell or battery, or an equivalent or similar type of cell or battery. Ordinarily, when used as an electrolyte in a sodium-sulfur cell, it has a density higher than 98 %, and preferably higher than 99 %, of the theoretical density for beta-alumina, i.e. $3.26 \text{ g/cm}^3$.

This invention is further illustrated by the following examples wherein the procedure was as follows unless otherwise noted :

The phase composition of the sintered polycrystalline ceramic tube was determined by X-ray diffraction analysis.

Density was determined in a standard manner.

Charge and discharge resistances were measured in a standard manner using a half cell consisting of $NaNO_3$/electrolyte/Na, where liquid sodium and liquid sodium nitrate at 350°C are used as electrodes on the inside, and outside of the electrolyte tube, respectively.

EXAMPLE 1

A sintered polycrystalline ceramic hollow tube closed at one end and open at the opposite end with an inner diameter of 1.0 cm, a wall thickness of 0.1 cm and a length of 8 cm was used as an electrolyte. The sintered tube was composed predominantly of sodium beta"-alumina phase, i.e. 96 % by volume of the tube was sodium beta"-alumina phase, and the remainder was sodium beta-alumina phase, and is hereinafter referred to as the beta"-alumina tube. The chemical composition of the beta"-alumina tube was 9.6 % by weight $Na_2O$, 0.75 % by weight $Li_2O$ and the balance was $Al_2O_3$. The beta"-alumina tube had a density greater than 99 % of the theoretical density for beta-alumina and had been prepared in a known manner, i.e. the composition of 9.6 % by weight $Na_2O$, 0.75 % by weight $Li_2O$ and balance $Al_2O_3$ was formed into the shape of a green tube and fired at 1580°C in an atmosphere which had no significant deleterious effect on it. The microstructure of this as-sintered tube is shown in Figure 1.

The beta"-alumina tube was assembled in a half-cell suitable for electrolytic filling. A sodium nitrate bath was used to fill the cell with liquid sodium. After 15Ah of sodium filling the resistance was measured during both the charge and discharge mode. The following radial resistances, i.e. resistances through the radial portion of the tube, were obtained at 350°C :

Charge Resistance ($R_c$) = 0.15 Ω

Discharge Resistance ($R_d$) = 0.19 Ω

Therefore, this tube exhibited asymmetric behavior because $R_d > R_c$.

EXAMPLE 2

Another beta"-alumina tube from the same ceramic batch as the tube of Example 1 was used in this example as an electrolyte. Specifically, this beta"-alumina tube had the same composition and did not differ in any significant manner from the beta"-alumina tube of Example 1. This as-sintered tube had a surface which was substantially similar to that shown in Figure 1.

This beta"-alumina tube was washed with distilled water maintained at 70°C by completely immersing the tube in the water for 30 minutes. The tube was then immersed in methanol at room temperature for 15 minutes to remove excess water. (As the tube was being transferred from the water to the methanol, it cooled to almost room temperature).

The tube was then removed from the methanol, placed in a furnace at room temperature, and was annealed, i.e. dried, in a vacuum of $10^{-3}$mm Hg at a temperature of 1000°C for two hours. It was then furnace-cooled to room temperature.

The resulting tube had a surface which was substantially similar to that shown in Figure 2.

This tube was then assembled as half-cell in substantially the same manner as disclosed in Example 1. After electrolytic filling to 15Ah, the radial resistance of the tube was measured at 350°C in charge and discharge modes in substantially the same manner as disclosed in Example 1. The following results were obtained.

| | | Radial Resistance ( $\Omega$) | |
|---|---|---|---|
| Tube N° : | Temperature (°C) | Charge ($R_c$) | Discharge ($R_d$) |
| GZ3-4 | 350 | 0.058 | 0.062 |

The results show that this tube exhibited symmetric behavior because $R_c \simeq R_d$, i.e. the charge resistance ($R_c$) does not differ significantly from the discharge resistance ($R_d$).

EXAMPLE 3

To be sure that it was the water treatment which produced the symmetric behavior of Example 2, the procedure used in this example was the same as that disclosed in Example 2 except that a drying temperature of 100°C was used rather than 1000°C. Specifically, another beta"-alumina tube which did not differ significantly in composition or in any significant manner from the beta"-alumina tube of Example 1 was used as an electrolyte in this Example. It had a surface which was substantially similar to that of Figure 1.

This beta"-alumina tube was washed with distilled water maintained at 70°C by completely immersing the tube in the water for 30 minutes. The tube was then immersed in methanol at room temperature for 15 Minutes to remove excess water therefrom. (As the tube was being transferred from the distilled water to the methanol, it cooled to almost room temperature.

The tube was then removed from the methanol, placed in a furnace at room temperature, and was dried in a vacuum of $10^{-3}$mm Hg at 100°C for 2 hours.

The surface of the resulting tube is shown in Figure 2. Specifically, its surface morphology was of geometric shape, and it was comprised of randomly stacked multi-faceted platelets of varying size and the platelet boundaries were well defined.

The resulting tube was then assembled into a half cell in substantially the same manner as disclosed in Example 2, and its radial resistances were measured in substantially the same manner as set forth in Example 2. The results were as follows :

| | | Radial Resistance ($\Omega$) | |
|---|---|---|---|
| Tube N° : | Temperature (°C) | Charge ($R_c$) | Discharge ($R_d$) |
| HD1-6 | 350 | 0.054 | 0.054 |

The results show that the present treatment of water washing and drying resulted in a ceramic electrolyte tube of symmetric resistances, i.e., of symmetric polarization.

EXAMPLE 4

The procedure used in this example was substantially similar to that disclosed in Example 3 except that the present sintered ceramic tube used as an electrolyte was different in composition and was comprised of 100 % by volume of the beta"-alumina phase, i.e., it consisted essentially of sodium beta"-alumina phase. Specifically, the present ceramic electrolyte was produced from a mixture of $Na_2O$, $Li_2O$, $MgO$ and alumina. The $MgO$ was used in a stabilizing amount of less than 5 % by weight of the total weight of the electrolyte. This as-sintered tube had a surface substantially similar to that shown in Figure 1, and it had a density greater than 99 % of the theoretical density for beta-alumina.

This tube was washed with distilled water and immersed in methanol in the same manner as disclosed in Example 3, but it was dried at room temperature in air for 30 minutes. The resulting tube had a surface which was substantially similar to that shown in Figure 2.

The resulting tube was then assembled into a half cell and its radial resistances were measured in substantially the same manner as disclosed in Example 2. The following results were obtained :

| Tube N° : | Temperature | Radial Resistance ($\Omega$) | |
| | | Charge ($R_c$) | Discharge ($R_d$) |
| --- | --- | --- | --- |
| AL-3-A-8 | 350 | 0.049 | 0.044 |

The results show that this tube exhibited symmetric behavior because $R_c \simeq R_d$, i.e., the charge resistance ($R_c$) did not differ significantly from the discharge resistance ($R_d$).

EXAMPLE 5

Another beta"-alumina tube from the same ceramic batch as the tube of Example 4 was used in this example as an electrolyte. Specifically, this beta"-alumina tube had the same composition and did not differ in any significant manner from the beta"-alumina tube of Example 4. This as-sintered tube had a surface which was substantially similar to the surface shown in Figure 1.

The procedure used in this example was substantially the same as that disclosed in Example 4 except that this tube was not washed or dried.

The following radial resistances were obtained :

| Tube N° : | Temperature (°C) | Radial Resistance ($\Omega$) | |
| | | Charge ($R_c$) | Discharge ($R_d$) |
| --- | --- | --- | --- |
| AL-3-A-2 | 350 | 0.07 | 0.40 |

The results show that this tube exhibited asymmetric behavior in the as-sintered state because the discharge resistance ($R_d$) was substantially higher than the charge resistance ($R_c$).

16

0074548

CLAIMS

1. A process for producing a cationically-conductive ceramic electrolyte of symmetric polarization characterized in that it comprises providing a cationically-conductive ceramic electrolyte of asymmetric polarization, said asymmetric polarization being caused by asymmetric polarization-causing material on the surface portion of said ceramic electrolyte, said electrolyte ranging in composition from an alkali metal beta"-alumina phase to a mixture of alkali metal beta"-alumina phase and up to 50 % by volume of alkali metal beta-alumina phase based on the total volume of the electrolyte, said alkali metal being selected from the group consisting of sodium, potassium, lithium, mixtures thereof and alloys thereof, washing the surface portion of said ceramic electrolyte with water or steam to remove said asymmetric polarization-causing material therefrom and drying said washed ceramic electrolyte to produce said cationically-conductive ceramic electrolyte of symmetric polarization, said washing and drying having no significant deleterious effect on said ceramic electrolyte.

2. The process according to claim 1 characterized in that said alkali metal is sodium.

3. The process according to claim 1 characterized in that the temperature of said water ranges from room temperature to a temperature up to its boiling point.

4. The process according to claim 3 characterized in that the temperature of said water ranges from 65°C to 75°C.

5. The process according to claim 1 characterized in that said water is distilled water.

6. The process according to claim 1 characterized in that said ceramic electrolyte is immersed in said water.

7. The process according to claim 1 characterized in that said ceramic electrolyte contains a stabilizer for said alkali metal beta"-alumina phase in a stabilizing amount.

8. The process according to claim 7 characterized in that said stabilizer is selected from the group consisting of $Li_2O$, MgO, NiO, CoO and mixtures thereof.

9. The process according to claim 7 characterized in that said ceramic electrolyte is in the form of a hollow tube closed at one end and useful as an electrolyte in a sodium-sulfur cell.

10. A cationically-conductive ceramic electrolyte having a surface characterizable as having a morphology of geometric shape, said surface being comprised of randomly stacked multi-faceted platelets, said ceramic electrolyte being of symmetric polarization, said ceramic electrolyte ranging in composition from an alkali metal beta"-alumina phase to a mixture of alkali metal beta"-alumina phase and up to 50 % by volume of alkali metal beta-alumina phase based on the total volume of said electrolyte, said alkali metal being selected from the group consisting of sodium, potassium, lithium, mixtures thereof and alloys thereof.

11. The cationically-conductive ceramic electrolyte of claim 10 characterized in that said alkali metal is sodium.

12. The ceramic electrolyte of claim 10 characterized in that it is in the form of a hollow tube closed at one end and useful as an electrolyte in a sodium-sulfur cell.

13. The cationically-conductive ceramic electrolyte of claim 12, characterized in that said ceramic electrolyte contains a stabilizer for said alkali metal beta"-alumina phase in a stabilizing amount.

14. The cationically-conductive ceramic electrolyte of claim 13, characterized in that said stabilizer is selected from the group consisting of $LiO_2$, MgO, NiO, CoO and mixtures thereof.

FIG. 1

FIG. 2

# FIG. 3

Phase diagram (B). Y-axis: °C from 1000 to 2100. X-axis: MOLE % $Al_2O_3$ from $Na_2O \cdot Al_2O_3$ to $Al_2O_3$, with gridlines at 60, 70, 80, 90.

Regions labeled:
- (B) LIQUID
- LIQUID + $\alpha Al_2O_3$
- LIQUID + 2B$\beta$
- LIQUID + $\delta$ 1:1
- $\delta$
- $\gamma + \delta$
- $\gamma$
- 1580
- $\delta$ 1:1 + 2 B$\beta$
- $\delta$ 1:1 + 3 B$\beta$
- 1410
- $\gamma$ 1:1 + 3 B$\beta$
- 2B$\beta$ + $\alpha Al_2O_3$
- 2B$\beta$
- 3B$\beta$ + 2B$\beta$
- 3B$\beta$
- 1:6, 1:7, 1:9, 1:11

European Patent Office

**EUROPEAN SEARCH REPORT**

0074548
Application number

EP 82 10 7930

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 015 428 (KABUSHIKI KAISHA CHUO KENKYUSHO) *Page 7, lines 33-40; page 8, lines 1-21* | 1,2,6 | H 01 M 10/39 C 04 B 41/00 |
| Y | CHEMICAL ABSTRACTS, vol. 95, no. 1, July 1981, page 276, no. 11517m, Columbus Ohio (USA); & SU - A - 783 283 (KAZAN CHEMI-CAL-TECHNOLOGICAL INSTITUTE) (30-01-1980) *Abstract* | 1 | |
| P,Y | SOLID STATE IONICS, vol. 5, October 1981, pages 275-278, Amsterdam (NL); W.G.BUGDEN et al.: "The control of the resistance rise of sodium sulphur cells". *Page 276, right-hand column: 3(a); page 277* | 1,2,7, 8,9 | |
| A | US-A-3 240 563 (ROBERT A.MERCURI) | | TECHNICAL FIELDS SEARCHED (Int. Cl. ³) |
| A | EP-A-0 032 033 (CHLORIDE SILENT POWER LTD) | | H 01 M 10/39 C 04 B 41/00 |
| A | US-A-3 607 436 (RICHARD J.CHARLES) | | |

The present search report has been drawn up for all claims

| Place of search | Date of completion of the search | Examiner |
|---|---|---|
| THE HAGUE | 25-11-1982 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82